(19) **Europäisches Patentamt / European Patent Office / Office européen des brevets**

(11) **EP 4 193 845 B1**

(12) # EUROPÄISCHE PATENTSCHRIFT

(45) Veröffentlichungstag und Bekanntmachung des Hinweises auf die Patenterteilung:
**08.05.2024   Patentblatt 2024/19**

(21) Anmeldenummer: **22200467.3**

(22) Anmeldetag: **10.10.2022**

(51) Internationale Patentklassifikation (IPC):
**A23K 10/12** (2016.01)   **A23K 40/25** (2016.01)
**A23K 50/80** (2016.01)   **A23K 10/22** (2016.01)
**A23K 10/30** (2016.01)   **A23K 20/142** (2016.01)
**A23K 10/37** (2016.01)

(52) Gemeinsame Patentklassifikation (CPC):
**A23K 50/80; A23K 10/12; A23K 10/22;**
**A23K 10/30; A23K 10/37; A23K 20/142;**
**A23K 40/25;** A23K 20/111; A23K 20/163;
A23K 20/174; A23K 20/179; Y02A 40/818

(54) **FISCHFUTTERZUSAMMENSETZUNG UND DEREN VERWENDUNG**

FISH FEED COMPOSITION AND USE THEREOF

COMPOSITION D'ALIMENT POUR POISSONS ET UTILISATION DE CELLE-CI

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **13.12.2021   EP 21214066**

(43) Veröffentlichungstag der Anmeldung:
**14.06.2023   Patentblatt 2023/24**

(73) Patentinhaber: **OASE GmbH**
**48477 Hörstel-Riesenbeck (DE)**

(72) Erfinder: **MUCK, Thorsten**
**49479 Ibbenbüren (DE)**

(74) Vertreter: **Isarpatent**
**Patent- und Rechtsanwälte Barth**
**Charles Hassa Peckmann & Partner mbB**
**Friedrichstrasse 31**
**80801 München (DE)**

(56) Entgegenhaltungen:
|  |  |
|---|---|
| **AT-A1- 522 392** | **CN-A- 109 043 230** |
| **CN-A- 110 583 902** | **CN-A- 111 296 690** |
| **DE-A1- 4 233 575** | **DE-C2- 2 813 248** |
| **US-A1- 2013 312 669** | |

**Beschreibung**

**Gebiet der Erfindung**

Die Erfindung betrifft eine Fischfutterzusammensetzung und deren Verwendung.

**Stand der Technik**

Kommerzielles Fischfutter besteht prinzipiell aus Proteinen, Fetten, Kohlenhydraten, mineralischen Bestandteilen, Kollagenen und Zusatzstoffen wie Vitaminen und Spurenelementen. Beispielsweise wird in DE 10 2004 048 949 A1 ein Fischfutter mit wasserlöslichem Astaxanthin als Futtermittelzusatz in der Fischzucht zur Pigmentierung von Lachsen und Forellen beschrieben. EP 1 346 647 A1 beschreibt ein Fischfutter zur Aufzucht von Lachsfischen.

Hinsichtlich der physiologischen Verwertbarkeit der Proteine im Fischfutter kommt es insbesondere auf deren Beschaffenheit an. Kohlenhydrate führen tendenziell zur Verfettung der Fische, im Speziellenje komplexer die Struktur der Kohlenhydrate ist. Bezüglich der Fette im Fischfutter ist ein höherer Anteil an Omega-3-Fettsäuren und ein geringer Anteil an Omega-6-Fettsäuren gewünscht. Wenn Aminosäuren Bestandteil von Fischfutter sind, sollte der Anteil an essentiellen Aminosäuren nicht zu gering sein, während das Verhältnis der essentiellen Aminosäuren zu den restlichen Aminosäuren passen muss. Ansonsten werden Aminosäuren von Fischen verstoffwechselt und zu Ammoniak umgesetzt, was zu einer Verschmutzung des Wassers, insbesondere aufgrund der Ausscheidungen, und zu einer inneren Vergiftung der Fische führen kann.

Herkömmliche Fischfutter sind oft auf das schnelle Wachstum der Fische ausgelegt. Die Hauptbestandteile solcher Fischfutter sind Fett, Kohlenhydrate und Aminosäuren. Weiterhin werden häufig viele unterschiedliche Kohlenhydrat- und Proteinquellen eingesetzt, was allerdings die Verfettung der Fische fördern kann. Da höhere Schlachtgewichte bei kürzeren Aufzuchtzeiten (1-2 Jahre) erreicht werden, spielt die natürliche Lebenserwartung der Tiere keine Rolle. DE4 233 575 A1 offenbart ein Zierfischfutter, wobei sich das Futtermittel aus tierischem und pflanzlichem Eiweiß, Ballaststoffen und Calcium zusammensetzt und sich in tablettierter Form darstellt,gekennzeichnet dadurch, daß es 2,0-8,0 Volumeneinheiten pflanzliches Eiweiß, 2,0-8,0 Volumeneinheiten tierisches Eiweiß, 1,0-4,0 Volumeneinheiten Calciumlaktat, 0,5-3,0 Volumeneinheiten Polyvinylalkohol, 0,5-6,0 Volumeneinheiten Karbonat, 0,5-6,0 Volumeneinheiten Säure, jeweils bezogen auf das Gesamtvolumen des Gemisches, enthält, wobei, daß das pflanzliche Eiweiß insbesondere aus ungemahlenen Weizenkeimen, gemahlener Kleie und/oder Tritikadeschrot besteht.

Demnach besteht der Bedarf an der Entwicklung eines ausgewogenen, gesunden und kostengünstigen Fischfutters, das eine hohe Akzeptanz bei Fischen aufweist, die Entwicklung dieser langfristig unterstützt und die Verbesserung der Wasserqualität fördert.

**Zusammenfassung der Erfindung**

In einem ersten Aspekt stellt die vorliegende Erfindung eine Fischfutterzusammensetzung bereit, die 40 - 70 Gew.% Getreidemehl, 15 - 30 Gew.% Mehl aus Wassertieren, 10 - 20 Gew.% Extraktionsschrot, 0,01 - 0,40 Gew.% Pfeffer und 0,1 - 1,0 Gew.% freies Methionin umfasst, wobei die Gewichtsprozente auf das Gesamtgewicht der Fischfutterzusammensetzung bezogen sind. Die Erfinder haben herausgefunden, dass die erfindungsgemäße Fischfutterzusammensetzung eine ausgewogene Entwicklung von Fischen fördert, einen hohen Futterkoeffizienten aufweist und die Proteinverwertbarkeit sowie die Verdaulichkeit verbessert. Ferner wird die Verfettung der Fische reduziert und die Belastung des Wassers, in dem die Fische gehalten werden, minimiert. Außerdem kann der Preis durch die geringe Anzahl unterschiedlicher Protein- und Kohlenwasserstoffquellen gesenkt werden.

In einem weiteren Aspekt wird die Verwendung der Fischfutterzusammensetzung gemäß des ersten Aspekts als Fischfutter für Zierfische bereitgestellt. Die oben genannten Effekte und Vorteile sind bei Zierfischen besonders ausgeprägt.

Weitere Aspekte der vorliegenden Erfindung sind den abhängigen Ansprüchen und der detaillierten Beschreibung zu entnehmen.

**Detaillierte Beschreibung der Erfindung**

Definitionen

So nicht anderweitig definiert haben hierin verwendete technische und wissenschaftliche Ausdrücke dieselbe Bedeutung, wie sie von einem Fachmann auf dem Fachgebiet der Erfindung gemeinhin verstanden wird.

Mengenangaben im Rahmen der vorliegenden Erfindung beziehen sich auf Gew.%, soweit nicht anderweitig angegeben oder aus dem Kontext ersichtlich ist.

Im Kontext der Erfindung ist der Begriff "Methionin" nicht besonders limitiert. Wie allgemein bekannt ist Methionin eine schwefelhaltige $\alpha$-Aminosäure. In bestimmten Ausführungsformen umfasst Methionin ein racemisches Gemisch aus L-Methionin und D-Methionin. Gemäß einigen Ausführungsformen bezieht sich Methionin auf L-Methionin.

Der Begriff "freies Methionin" ist nicht besonders limitiert. Wie allgemein bekannt ist eine freie Aminosäure nicht als Bestandteil eines Proteins oder sonstigen Moleküls gebunden, sondern liegt in freier Form vor. Dementsprechend bezieht sich der Begriff "freies Methionin" gemäß einigen Ausführungsformen auf die nicht gebundene Form des Methionins. Insbesondere ist das freie Methionin nicht Bestandteil eines Proteins. L-Methionin kommt beispielsweise in rohem Rindfleisch, rohem Hähnchenfleisch, rohem Lachs, Hühnerei, Kuhmilch, Sesam, Paranüssen, Walnüssen, Weizen-Vollkornmehl, Mais-Vollkornmehl, Reis, Buchweizenmehl, Sojabohnen und Erbsen vor. Alle diese Nahrungsmittel enthalten allerdings praktisch ausschließlich chemisch gebundenes L-Methionin als Proteinbestandteil, jedoch kein freies L-Methionin.

Der Begriff "DL-Methionin" ist nicht besonders limitiert. Wie allgemein bekannt bezieht sich DL-Methionin auf ein racemisches Gemisch aus L-Methionin und D-Methionin.

"Wassertiere" sind im Kontext der Erfindung nicht besonders limitiert. Wie allgemein bekannt ist ein Wassertier ein im Wasser lebendes Tier. In bestimmten Ausführungsformen sind Wassertiere Fische, Krill, Garnelen, Krebse und Muscheln.

Der Begriff "fermentierter Reis" ist nicht besonders limitiert. Allgemein wird mit "fermentierten Reis" rot fermentierter Reis bezeichnet, der durch Fermentierung mittels Hefe und/oder Schimmelpilzen aus gekochtem weißen Reis hergestellt wird.

Im Kontext der vorliegenden Erfindung ist "Extraktionsschrot" nicht besonders limitiert. Das Extraktionsschrot ist wie allgemein bekannt eine Form des Ölschrots. Es entsteht als Koppelprodukt bei der Gewinnung von Pflanzenölen durch Heißpress- bzw. Extraktionsverfahren. Die Extraktionsmittelrückstände werden dabei mittels Wasserdampf entfernt. Gemäß manchem Ausführungsformen bezieht sich "Extraktionsschrot" auf Sojaextra ktionsschrot.

Der Begriff "Antioxidationsmittel" ist im Kontext der Erfindung nicht besonders limitiert. Wie allgemein bekannt sind Antioxidationsmittel chemische Verbindungen, welche eine Oxidation anderer Substanzen verlangsamen oder gänzlich verhindern. In der vorliegenden Erfindung können die in der Tierfutterindustrie und insbesondere Fischfutterindustrie gängigen Antioxidationsmittel eingesetzt werden.

Im Kontext der vorliegenden Erfindung ist der Begriff "Farbstoff" nicht besonders limitiert, außer dass es sich bei dem Farbstoff um einen Farbstoff handelt, der für Fische verträglich ist.

Der Begriff "Zierfisch" bzw. "Zierfische" ist nicht besonders limitiert. Wie allgemein bekannt sind Zierfische beliebige Fischarten, die wegen ihres Äußeren in Aquarien und/oder Teichen gehalten werden. Gemäß einigen Ausführungsformen sind Zierfische Aquarienfische und/oder Teichfische.

"Süßwasserfische" sind im Kontext der vorliegenden Erfindung nicht besonders limitiert. Süßwasserfische bewohnen wie allgemein bekannt Binnengewässer, Seen und Flüsse. In bestimmten Ausführungsformen beziehen sich "Süßwasserfische" auf Aquarienfische und/oder Teichfische.

Der Begriff "Futterkoeffizient" ist nicht besonders limitiert. Unter einem Futterkoeffizienten wird allgemein das Verhältnis der Gewichtszunahme des gefütterten Tieres zum Gewicht des verfütterten Futters verstanden. Dementsprechend ist der Futterkoeffizient ein Maß der Futterverwertung. In bestimmten Ausführungsformen entspricht der Futterkoeffizient dem Quotienten aus der Gewichtszunahme der gefütterten Fische und der Menge an verfüttertem Fischfutter, beispielsweise in Kilogramm. Insbesondere wird der Futterkoeffizient nach folgender Formel berechnet:

$$Futterkoeffizient\ [\%] = \frac{Gewichtszunahme\ der\ Fische\ [kg]}{verf\ddot{u}tterte\ Menge\ an\ Fischfutter\ [kg]}$$

Ein erster Aspekt der Erfindung bezieht sich auf eine Fischfutterzusammensetzung, die 40 - 70 Gew.%, bevorzugt 55 - 60 Gew.% Getreidemehl, 15 - 30 Gew.%, bevorzugt 20 - 25 Gew.% Mehl aus Wassertieren, 10 - 20 Gew.%, bevorzugt 14 - 18 Gew.% Extraktionsschrot, 0,01 - 0,40 Gew.%, bevorzugt 0,05 - 0,2 Gew.% Pfeffer und 0,1 - 1,0, bevorzugt 0,2 - 0,5 Gew.% freies Methionin umfasst, wobei die Gewichtsprozente auf das Gesamtgewicht der Fischfutterzusammensetzung bezogen sind. Gemäß einigen Ausführungsformen ist die Fischfutterzusammensetzung eine Fischfutterzusammensetzung für Zierfische. Im Kontext der vorliegenden Erfindung können die Begriffe "Fischfutterzusammensetzung" und "Fischfutter" äquivalent verwendet werden.

Die erfindungsgemäße Fischfutterzusammensetzung zeigt eine hohe Akzeptanz bei Fischen, insbesondere bei Zierfischen. Mit hoher Akzeptanz ist die Bereitschaft der Fische gemeint, das Futter zu fressen. Ferner weist das Wasser, in dem Fische gehalten werden, die die erfindungsgemäße Fischfutterzusammensetzung verfüttert bekommen, niedrige Stickstoff- und Phosphorgehalte auf. Ein niedriger Stickstoffgehalt zeigt, dass mit der erfindungsgemäßen Fischfutterzusammensetzung die Ammonium-, Nitrat- und Nitritbelastung des Wassers nicht besonders ansteigt, wohingegen ein geringer Phosphorgehalt auf eine niedrige Phosphatbelastung des Wassers und eine gute Futterverwertung schließen lässt.

Ohne an eine bestimmte Theorie gebunden sein zu wollen wird angenommen, dass die genannte niedrige Wasserbelastung auf die hohe Verwertbarkeit und Verdaulichkeit der Fischfutterzusammensetzung zurückzuführen ist. So resultiert beispielsweise ein zu geringer Anteil an essentiellen Aminosäuren und ein unpassendes Verhältnis von essentiellen Aminosäuren zu restlichen Aminosäuren im Fischfutter in einem erhöhten Ammoniumgehalt des Wassers, was unter anderem auf die energetische Verstoffwechselung überschüssiger Aminosäuren zurückgeführt werden kann. Ferner wird angenommen, dass die Kombination an Pfeffer und freiem Methionin die Proteinverwertbarkeit und Verdaulichkeit des Fischfutters fördert sowie zu einem hohen Futterkoeffizienten beiträgt. Es wird vermutet, dass die positiven Effekte auf eine präbiotische Wirkung von Pfeffer und Methionin als essentielle Aminosäure zurückgeführt werden könnten. Der Pfeffer setzt Piperin frei, das einen stärkeren Fluss der Verdauungssäfte mobilisiert und so eine höhere Durchdringung des Futterbreies vermitteln kann, was den osmotischen und diffusiven Transport von Nährstoffen in den Organismus fördert, während durch Methionin eine limitierende Proteinverwertung beseitigt werden kann. Nach dem Liebig'schen Minimalprinzip werden die essentiellen Nährelemente im Nahrungsbrei besser erschlossen und so wird die Verwertbarkeit der Nährstoffe insgesamt verbessert.

Die erfindungsgemäße Fischfutterzusammensetzung weist neben der vorteilhaften Kombination an Pfeffer und freiem Methionin eine geringe Anzahl an Kohlenwasserstoff- und Proteinquellen, einen niedrigen Fettgehalt und einen hohen Omega-3-Fettsäuregehalt auf. Es hat sich gezeigt, dass dadurch ein ausgewogenes Wachstum und eine gesunde Entwicklung der Fische erreicht werden kann. Insbesondere wird die Verfettung der Fische verringert und ein hoher Futterkoeffizient erreicht. Dementsprechend ist die erfindungsgemäße Fischfutterzusammensetzung insbesondere zur gesunden und nachhaltigen Ernährung von Fischen geeignet. Des Weiteren wird der Preis der Fischfutterzusammensetzung durch die geringe Anzahl unterschiedlichen Komponenten gesenkt.

Gemäß bestimmten Ausführungsformen umfasst die Fischfutterzusammensetzung ferner 0,1 - 4,0 Gew.%, bevorzugt 0,2 - 2,0 Gew.% Algen, 0,1 - 2,5 Gew.%, bevorzugt 0,2 - 1,5 Gew.% fermentierter Reis und 0,01 - 0,10 Gew.%, bevorzugt 0,03 - 0,08 Gew.% Kräuter, bezogen auf das Gesamtgewicht der Fischfutterzusammensetzung. Durch diese Bestandteile in den angegebenen Mengen wird die Akzeptanz der Fischfutterzusammensetzung weiter erhöht und die Verdaulichkeit weiter verbessert. Ferner kann die Fischfutterzusammensetzung 1,0 - 5,0 Gew.%, bevorzugt 2,0 - 3,0 Gew.% Weizenkeime, bezogen auf das Gesamtgewicht der Fischfutterzusammensetzung, enthalten. Dadurch kann die Verwertbarkeit und Akzeptanz der Fischfutterzusammensetzung weiter gesteigert und das Fischfutter besser an die Bedürfnisse der jeweiligen Fischart angepasst werden.

In einigen Ausführungsformen sind die Algen ausgewählt sind aus der Gruppe bestehend aus Spirulinaalgen, Meeresalgen und Mischungen davon. Dadurch kann der Nährstoffgehalt der Fischfutterzusammensetzung weiter erhöht werden. Gemäß bestimmten Ausführungsformen sind die Kräuter ausgewählt sind aus der Gruppe bestehend aus Thymian, Salbei, Rosmarin, Fenchel, Anis, Bohnenkraut und Mischungen davon. In bevorzugten Ausführungsformen sind die Kräuter eine Kräutermischung aus Thymian, Salbei, Rosmarin, Fenchel, Anis, und Bohnenkraut. Durch die genannten Kräuter wird die Verdaulichkeit der Fischfutterzusammensetzung weiter verbessert und die Akzeptanz weiter erhöht.

Gemäß bestimmten Ausführungsformen ist das Getreidemehl ausgewählt aus der Gruppe bestehend aus Weizenmehl, Maismehl, Reismehl und Mischungen davon. Insbesondere können Weizen- und/oder Maismehl den Hauptbestandteil des Getreidemehls bilden. Durch die Auswahl des Getreidemehls werden die Kohlenwasserstoffquellen der Fischfutterzusammensetzung weiter reduziert und damit die Verfettung der Fische weiter minimiert. In einigen Ausführungsformen ist das Mehl aus Wassertieren ausgewählt aus der Gruppe bestehend aus Fischmehl, Krillmehl, Garnelenmehl und Mischungen davon. Damit wird die Verdaulichkeit der Fischfutterzusammensetzung weiter verbessert. Insbesondere kann Fischmehl den Hauptbestandteil des Mehls aus Wassertieren darstellen.

In einigen Ausführungsformen ist der Extraktionsschrot der erfindungsgemäßen Fischfutterzusammensetzung Sojaextraktionsschrot. Sojaextraktionsschrot, auch "Sojaschrot" genannt, weist einen hohen Proteingehalt auf und ist als Proteinquelle für die erfindungsgemäße Fischfutterzusammensetzung hervorragend geeignet. Durch den Einsatz von Sojaextraktionsschrot kann in Verbindung mit Methionin und Pfeffer die Proteinverwertbarkeit und Verdaulichkeit der Fischfutterzusammensetzung weiter verbessert werden. Gemäß einigen Ausführungsformen ist das freie Methionin DL-Methionin. Die Proteinverwertbarkeit und Verdaulichkeit wird durch den Einsatz von DL-Methionin weiter gesteigert und die Verfettung der Fische weiter gesenkt. In bestimmten Ausführungsformen ist der Pfeffer schwarzer Pfeffer. Durch die Verwendung von schwarzem Pfeffer in der erfindungsgemäßen Fischfutterzusammensetzung wird die Akzeptanz der Fischfutterzusammensetzung sowie deren Verdaulichkeit weiter erhöht und dadurch die Wasserqualität weiter verbessert. Ferner ist schwarzer Pfeffer weniger denaturiert und dadurch bevorzugt. Insbesondere liegt der Pfeffer in der vorliegenden Fischfutterzusammensetzung in gemahlener Form vor.

Gemäß bestimmten Ausführungsformen enthält die erfindungsgemäße Fischfutterzusammensetzung Zusatzstoffe. Diese können ausgewählt sein aus der Gruppe bestehend aus Vitamine, Antioxidationsmittel, Farbstoff, Cholinchlorid, Inositol und Mischungen davon. Weiterhin können die Vitamine ausgewählt werden aus der Gruppe bestehend aus Vitamin A, Vitamin D3, Vitamin E, Vitamin C und Mischungen davon. Der Zusatz von Vitaminen fördert die Entwicklung der Fische und trägt zur gesunden Ernährung bei. Durch Antioxidationsmittel wird die Haltbarkeit der Fischfutterzusammensetzung verlängert. Als geeignetes Antioxidationsmittel für die erfindungsgemäße Fischfutterzusammensetzung kann Butylhydroxytoluol eingesetzt werden. Ferner kann als Farbstoff Canthaxanthin eingesetzt werden, wodurch sich die Optik der Fischfutterzusammensetzung und/oder der Fische verbessert. Cholinchlorid beugt Leberschäden bei Fischen vor.

In einigen Ausführungsformen besteht die Fischfutterzusammensetzung aus 50 - 60 Gew.% Weizenmehl, 20 - 25 Gew.% Fischmehl, 15 - 20 Gew.% Sojaextraktionsschrot, 2 - 3 Gew.% Weizenkeime, 1,0 - 1,5 Gew.% Spirulinaalgen, 0,1 - 1,0 Gew.% Garnelenmehl, 0,1 - 1,0 Gew.% Krillmehl, 0,1 - 1,0 Gew.% fermentierter Reis, 0,1 - 1,0 Gew.% Meeresalgen, 0,1 - 0,5 Gew.% freies DL-Methionin, 0,01 - 0,50 Gew.% Pfeffer, 0,01 - 0,10 Gew.% Kräuter, und Zusatzstoffe als Rest. Die Gewichtsprozente beziehen sich auf das Gesamtgewicht der Fischfutterzusammensetzung und ergänzen sich mit den Zusatzstoffen zu 100 Gew.%. Durch diese Fischfutterzusammensetzung wird der Futterkoeffizient, die Verdaulichkeit, die Proteinverwertbarkeit und die Wasserqualität weiter verbessert und die Akzeptanz des Fischfutters weiter erhöht sowie die Verfettung der Fische verringert. Ferner weist diese Zusammensetzung eine geringe Anzahl an Kohlenwasserstoff- und Proteinquellen, einen niedrigen Fettgehalt und einen hohen Omega-3-Fettsäuregehalt auf. In einer bevorzugten Ausführungsform ist diese Fischfutterzusammensetzung eine Fischfutterzusammensetzung für japanische Zierkarpfen, insbesondere Koikarpfen.

Gemäß bestimmten Ausführungsformen besteht die Fischfutterzusammensetzung aus 45 - 55 Gew.% Maismehl, 20 - 25 Gew.% Fischmehl, 15 - 20 Gew.% Sojaextraktionsschrot, 8 - 12 Gew.% Weizenmehl, 0,1 - 1,0 Gew.% Garnelenmehl, 0,1 - 1,0 Gew.% Krillmehl, 0,1 - 1,0 Gew.% fermentierter Reis, 0,1 - 1,0 Gew.% Meeresalgen, 1,0 - 1,5 Gew.% Spirulinaalgen, 0,1 - 0,5 Gew.% freies DL-Methionin, 0,01 - 0,50 Gew.% Pfeffer, 0,01 - 0,10 Gew.% Kräuter, und Zusatzstoffe als Rest. Die Gewichtsprozente beziehen sich auf das Gesamtgewicht der Fischfutterzusammensetzung und ergänzen sich mit den Zusatzstoffen zu 100 Gew.%. Durch diese Fischfutterzusammensetzung wird der Futterkoeffizient, die Verdaulichkeit, die Proteinverwertbarkeit und die Wasserqualität weiter verbessert und die Akzeptanz des Fischfutters weiter erhöht sowie die Verfettung der Fische verringert. Ferner weist diese Zusammensetzung eine geringe Anzahl an Kohlenwasserstoff- und Proteinquellen, einen niedrigen Fettgehalt und einen hohen Omega-3-Fettsäuregehalt auf. In einer bevorzugten Ausführungsform ist diese Fischfutterzusammensetzung eine Fischfutterzusammensetzung für Zierfische im Gartenteich, insbesondere Goldfische, Elritzen, Bitterlinge, Moderlieschen, Goldorfen und Sonnenbarsche.

Ein zweiter Aspekt der vorliegenden Erfindung bezieht sich auf die Verwendung der Fischfutterzusammensetzung des ersten Aspekts als Fischfutter für Zierfische. Auf die obigen Ausführungen zum ersten Aspekt der Erfindung wird Bezug genommen, wobei diese auch für den zweiten Aspekt der Erfindung gelten. Bei Zierfischen ist die gesunde und nachhaltige Ernährung und eine ausgewogene Entwicklung besonders wichtig. Eine schnelle Gewichtszunahme ist dabei nicht erforderlich. Da die Fischfutterzusammensetzung des ersten Aspekts, wie oben beschreiben, die Proteinverwertbarkeit und die Verdaulichkeit fördert sowie einen hohen Futterkoeffizienten aufweist und die Verfettung verringert, ist die Fischfutterzusammensetzung des ersten Aspekts besonders gut als Fischfutter für Zierfische geeignet. Außerdem wird durch die Fischfutterzusammensetzung des ersten Aspekts die Belastung des Wassers verringert, was insbesondere bei der Haltung von Zierfischen in Aquarien und/oder Teichen von Vorteil ist. Dabei sind die genannten Effekte besonders ausgeprägt, wenn die Zierfische Süßwasserfische sind. In bestimmten Ausführungsformen sind die Zierfische ausgewählt aus der Gruppe bestehend aus Koikarpfen, Goldfische, Elritzen, Bitterlinge, Moderlieschen, Goldorfen und Sonnenbarsche. Bei Verwendung der Fischfutterzusammensetzung des ersten Aspekts als Fischfutter für diese Zierfische sind die oben genannten Effekte besonders ausgeprägt.

In einer bestimmten Ausführungsform wird eine Fischfutterzusammensetzung als Fischfutter für Koikarpfen verwendet, wobei die Fischfutterzusammensetzung aus 50 - 60 Gew.% Weizenmehl, 20 - 25 Gew.% Fischmehl, 15 - 20 Gew.% Sojaextraktionsschrot, 2 - 3 Gew.% Weizenkeime, 1,0 - 1,5 Gew.% Spirulinaalgen, 0,1 - 1,0 Gew.% Garnelenmehl, 0,1 - 1,0 Gew.% Krillmehl, 0,1 - 1,0 Gew.% fermentierter Reis, 0,1 - 1,0 Gew.% Meeresalgen, 0,1 - 0,5 Gew.% freies DL-Methionin, 0,01 - 0,50 Gew.% Pfeffer, 0,01 - 0,10 Gew.% Kräuter, und Zusatzstoffe als Rest besteht. Die Gewichtsprozente beziehen sich auf das Gesamtgewicht der Fischfutterzusammensetzung und ergänzen sich mit den Zusatzstoffen zu 100 Gew.%. Die Effekte hinsichtlich einer solchen Fischfutterzusammensetzung sind in den obigen Ausführungen zum ersten Aspekt der Erfindung beschrieben.

Gemäß einer bestimmten Ausführungsform wird eine Fischfutterzusammensetzung als Fischfutter für Goldfische, Elritzen, Bitterlinge, Moderlieschen, Goldorfen und Sonnenbarsche verwendet, wobei die Fischfutterzusammensetzung aus 45 - 55 Gew.% Maismehl, 20 - 25 Gew.% Fischmehl, 15 - 20 Gew.% Sojaextraktionsschrot, 8 - 12 Gew.% Weizenmehl, 0,1 - 1,0 Gew.% Garnelenmehl, 0,1 - 1,0 Gew.% Krillmehl, 0,1 - 1,0 Gew.% fermentierter Reis, 0,1 - 1,0 Gew.% Meeresalgen, 1,0 - 1,5 Gew.% Spirulinaalgen, 0,1 - 0,5 Gew.% freies DL-Methionin, 0,01 - 0,50 Gew.% Pfeffer, 0,01 - 0,10 Gew.% Kräuter, und Zusatzstoffe als Rest besteht. Die Gewichtsprozente beziehen sich auf das Gesamtgewicht der Fischfutterzusammensetzung und ergänzen sich mit den Zusatzstoffen zu 100 Gew.%.

Die Effekte hinsichtlich einer solchen Fischfutterzusammensetzung sind in den obigen Ausführungen zum ersten Aspekt der Erfindung beschrieben.

Das Herstellungsverfahren der erfindungsgemäßen Fischfutterzusammensetzung ist nicht besonders limitiert. Allgemein können bekannte Verfahren zur Herstellung von Fischfutter eingesetzt werden. Gemäß mancher Ausführungsformen ist das Herstellungsverfahren ein Extrusionsverfahren. In einigen Ausführungsformen kann die Fischfutterzusammensetzung durch Walzentrocknung hergestellt werden.

In bestimmten Ausführungsformen kann die Fischfutterzusammensetzung dadurch hergestellt werden, indem die einzelnen Komponenten der Fischfutterzusammensetzung in ihren jeweiligen Gewichtsanteilen eingewogen und vermischt werden. Dann kann die Mischung gesiebt (beispielsweise mit einer Maschenweite von 630 $\mu$m und/oder 1000 $\mu$m) und anschließend bei etwa 90 °C extrudiert werden. Die extrudierte Mischung kann bei etwa 60 °C für 20 Min getrocknet werden, um eine beispielhafte erfindungsgemäße Fischfutterzusammensetzung zu erhalten.

Gemäß einigen Ausführungsformen kann die Fischfutterzusammensetzung dadurch hergestellt werden, indem die einzelnen Komponenten der Fischfutterzusammensetzung in ihren jeweiligen Gewichtsanteilen eingewogen und vermischt werden. Die Mischung kann dann mittels eines Walzentrockners zu einem Film gewalzt und bei etwa 90 °C für 5 Min getrocknet werden. Der getrocknete Film kann anschließend abgeschabt werden, um eine beispielhafte erfindungsgemäße Fischfutterzusammensetzung zu erhalten.

**Beispiele**

Die Erfindung wird im Anschluss mit Bezug auf verschiedene Beispiele davon weiter im Detail erläutert. Die Erfindung ist jedoch nicht auf diese Beispiele beschränkt.

Beispiel 1: Fischfutterzusammensetzung für Koikarpfen

Eine Fischfutterzusammensetzung für Koikarpfen wurde durch Extrusion in Form von Pellets (3 - 4 mm Durchmesser) hergestellt. Die Fischfutterzusammensetzung wies die folgenden Inhaltstoffe auf (Tabelle 1).

*Tabelle 1: Inhaltsstoffe einer beispielhaften Fischfutterzusammensetzung für Koikarpfen*

| Inhaltsstoff | Menge [Gew.%] |
|---|---|
| Weizenmehl | 56,22 |
| Fischmehl | 21,5 |
| Sojaextraktionsschrot | 16 |
| Weizenkeime | 2,5 |
| Spirulinaalgen, getrocknet | 1,38 |
| Garnelenmehl | 0,5 |
| Krillmehl | 0,5 |
| Reis (fermentiert) | 0,5 |
| Meeresalgen, getrocknet | 0,25 |
| DL-Methionin | 0,25 |
| Pfeffer | 0,1 |
| Kräutervormischung* | 0,05 |
| Zusatzstoffe** | Rest der insg. 100 Gew.% |
| * Kräutervormischung aus Thymian, Salbei, Rosmarin, Fenchel, Anis, Bohnenkraut<br>**Zusatzstoffe: Vitamin A, Vitamin $D_3$, Vitamin E, Vitamin C, Canthaxanthin, Butylhydroxytoluol | |

Die analytischen Bestandteile der Fischfutterzusammensetzung sind in Tabelle 2 dargestellt.

*Tabelle 2: Analytische Bestandteile einer beispielhaften Fischfutterzusammensetzung für Koikarpfen*

| Bestandteil | Menge [Gew.%] |
|---|---|
| Rohprotein | 30,0 |

(fortgesetzt)

| Bestandteil | Menge [Gew.%] |
|---|---|
| Rohfett | 4,5 |
| Rohfaser | 3,5 |
| Rohasche | 7,0 |
| Calcium | 1,3 |
| Phosphor | 1,0 |
| Protein:Fett-Verhältnis | 6,7 : 1 |

Wie in Tabelle 2 gezeigt, wies die beispielhafte Fischfutterzusammensetzung einen hohen Rohproteingehalt und einen niedrigen Fettgehalt auf. Ferner zeigte die beispielhafte Fischfutterzusammensetzung eine hohe Akzeptanz bei der Verfütterung an Koikarpfen.

Beispiel 2: Fischfutterzusammensetzung für Zierfische im Gartenteich

Eine Fischfutterzusammensetzung für Zierfische im Gartenteich wurde durch Extrusion in Form von Sticks hergestellt. Die Fischfutterzusammensetzung wies die folgenden Inhaltsstoffe auf (Tabelle 3).

*Tabelle 3: Inhaltsstoffe einer beispielhaften Fischfutterzusammensetzung für Zierfische im Gartenteich*

| Inhaltsstoff | Menge [Gew.%] |
|---|---|
| Maismehl | 49 |
| Fischmehl | 22 |
| Sojaextraktionsschrot | 15,84 |
| Weizenmehl | 10,5 |
| Garnelenmehl | 0,5 |
| Krillmehl | 0,5 |
| Reis (fermentiert) | 0,5 |
| Spirulinaalgen, getrocknet | 0,25 |
| Meeresalgen, getrocknet | 0,25 |
| DL-Methionin | 0,25 |
| Pfeffer | 0,1 |
| Kräutervormischung* | 0,05 |
| Zusatzstoffe** | Rest der insg. 100 Gew.% |
| * Kräutervormischung aus Thymian, Salbei, Rosmarin, Fenchel, Anis, Bohnenkraut  \*\*Zusatzstoffe: Vitamin A, Vitamin $D_3$, Vitamin E, Vitamin C, Canthaxanthin, Butylhydroxytoluol | |

Die analytischen Bestandteile der Fischfutterzusammensetzung sind in Tabelle 4 dargestellt.

*Tabelle 4: Analytische Bestandteile einer beispielhaften Fischfutterzusammensetzung für Zierfische im Gartenteich*

| Bestandteil | Menge [Gew.%] |
|---|---|
| Rohprotein | 28,0 |
| Rohfett | 4,0 |
| Rohfaser | 2,5 |

(fortgesetzt)

| Bestandteil | Menge [Gew.%] |
|---|---|
| Rohasche | 6,5 |
| Protein:Fett-Verhältnis | 7,0 : 1 |

Wie in Tabelle 2 gezeigt, wies die beispielhafte Fischfutterzusammensetzung einen hohen Rohproteingehalt und einen niedrigen Fettgehalt auf. Ferner zeigte die beispielhafte Fischfutterzusammensetzung eine hohe Akzeptanz bei der Verfütterung an Zierfische im Gartenteich, aber auch an Koikarpfen.

Vergleichsbeispiel 1: Kommerzielle Fischfutterzusammensetzung für Teichfische A

Eine kommerziell erhältliche Fischfutterzusammensetzung bestehend aus Maismehl, Weizenmehl, Lachsmehl, Sojamehl, Reismehl, Weizenkeime, Garnelenmehl, Spinat, Spirulina, Hefeextrakt, Apfelextrakt und Grünmehl wurde auf deren analytischen Bestandteile untersucht. Die Ergebnisse sind in Tabelle 5 dargestellt.

*Tabelle 5: Analytische Bestandteile einer kommerziell erhältlichen Fischfutterzusammensetzung für Teichfische A*

| Bestandteil | Menge [Gew.%] |
|---|---|
| Rohprotein | 23 |
| Rohfett | 5,1 |
| Rohfaser | 1,9 |
| Rohasche | 5,6 |
| Protein:Fett-Verhältnis | 4,5 : 1 |

Vergleichsbeispiel 2: Kommerzielle Fischfutterzusammensetzung für Teichfische B

Eine kommerziell erhältliche Fischfutterzusammensetzung bestehend aus pflanzlichen Nebenerzeugnissen, Getreide, pflanzliche Eiweißextrakte, Fisch- und Fischnebenerzeugnisse, Öle und Fette, Mineralstoffe, Algen und Hefen wurde auf deren analytischen Bestandteile untersucht. Die Ergebnisse sind in Tabelle 6 dargestellt.

*Tabelle 6: Analytische Bestandteile einer kommerziell erhältlichen Fischfutterzusammensetzung für Teichfische B*

| Bestandteil | Menge [Gew.%] |
|---|---|
| Rohprotein | 28,8 |
| Rohfett | 5,4 |
| Rohfaser | 0,9 |
| Rohasche | 5,0 |
| Protein:Fett-Verhältnis | 5,3 : 1 |

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

**Patentansprüche**

1. Fischfutterzusammensetzung, umfassend:

40 - 70 Gew.% Getreidemehl,

15 - 30 Gew.% Mehl aus Wassertieren,
10 - 20 Gew.% Extraktionsschrot,
0,01 - 0,40 Gew.% Pfeffer,
0,1 - 1,0 Gew.% freies Methionin,
bezogen auf das Gesamtgewicht der Fischfutterzusammensetzung.

2. Fischfutterzusammensetzung nach Anspruch 1, ferner umfassend:

0,1 - 4,0 Gew.% Algen,
0,1 - 2,5 Gew.% fermentierter Reis,
0,01 - 0,10 Gew.% Kräuter,
optional 1,0 - 5,0 Gew.% Weizenkeime,
bezogen auf das Gesamtgewicht der Fischfutterzusammensetzung.

3. Fischfutterzusammensetzung nach Anspruch 2,

wobei die Algen ausgewählt sind aus der Gruppe bestehend aus Spirulinaalgen, Meeresalgen und Mischungen davon,
optional wobei die Kräuter ausgewählt sind aus der Gruppe bestehend aus Thymian, Salbei, Rosmarin, Fenchel, Anis, Bohnenkraut und Mischungen davon.

4. Fischfutterzusammensetzung nach einem der Ansprüche 1 bis 3,
wobei das Getreidemehl ausgewählt ist aus der Gruppe bestehend aus Weizenmehl, Maismehl, Reismehl und Mischungen davon.

5. Fischfutterzusammensetzung nach einem der Ansprüche 1 bis 4,
wobei das Mehl aus Wassertieren ausgewählt ist aus der Gruppe bestehend aus Fischmehl, Krillmehl, Garnelenmehl und Mischungen davon.

6. Fischfutterzusammensetzung nach einem der Ansprüche 1 bis 5,
wobei der Extraktionsschrot Sojaextraktionsschrot ist, optional wobei das freie Methionin DL-Methionin ist, ferner optional wobei der Pfeffer schwarzer Pfeffer ist.

7. Fischfutterzusammensetzung nach einem der Ansprüche 1 bis 6,
wobei die Fischfutterzusammensetzung ferner Zusatzstoffe enthält, ausgewählt aus der Gruppe bestehend aus Vitamine, Antioxidationsmittel, Farbstoff, Cholinchlorid, Inositol und Mischungen davon.

8. Fischfutterzusammensetzung nach Anspruch 7,

wobei die Vitamine ausgewählt sind aus der Gruppe bestehend aus Vitamin A, Vitamin $D_3$, Vitamin E, Vitamin C und Mischungen davon,
optional wobei der Farbstoff Canthaxanthin ist,
ferner optional wobei das Antioxidationsmittel Butylhydroxytoluol ist.

9. Fischfutterzusammensetzung nach einem der Ansprüche 1 bis 8,

wobei die Fischfutterzusammensetzung besteht aus:

50 - 60 Gew.% Weizenmehl,
20 - 25 Gew.% Fischmehl,
15 - 20 Gew.% Sojaextraktionsschrot,
2 - 3 Gew.% Weizenkeime,
1,0 - 1,5 Gew.% Spirulinaalgen,
0,1 - 1,0 Gew.% Garnelenmehl,
0,1 - 1,0 Gew.% Krillmehl,
0,1 - 1,0 Gew.% fermentierter Reis,
0,1 - 1,0 Gew.% Meeresalgen,
0,1 - 0,5 Gew.% freies DL-Methionin,

0,01 - 0,50 Gew.% Pfeffer,
0,01 - 0,10 Gew.% Kräuter,

und Zusatzstoffe als Rest, bezogen auf das Gesamtgewicht der Fischfutterzusammensetzung.

10. Fischfutterzusammensetzung nach einem der Ansprüche 1 bis 8,

wobei die Fischfutterzusammensetzung besteht aus:

45 - 55 Gew.% Maismehl,
20 - 25 Gew.% Fischmehl,
15 - 20 Gew.% Sojaextraktionsschrot,
8 - 12 Gew.% Weizenmehl,
0,1 - 1,0 Gew.% Garnelenmehl,
0,1 - 1,0 Gew.% Krillmehl,
0,1 - 1,0 Gew.% fermentierter Reis,
0,1 - 1,0 Gew.% Meeresalgen,
1,0 - 1,5 Gew.% Spirulinaalgen,
0,1 - 0,5 Gew.% freies DL-Methionin,
0,01 - 0,50 Gew.% Pfeffer,
0,01 - 0,10 Gew.% Kräuter,

und Zusatzstoffe als Rest, bezogen auf das Gesamtgewicht der Fischfutterzusammensetzung.

11. Verwendung der Fischfutterzusammensetzung nach einem der Ansprüche 1 bis 10 als Fischfutter für Zierfische.

12. Verwendung nach Anspruch 11, wobei die Zierfische Süßwasserfische sind.

13. Verwendung nach einem der Ansprüche 11 oder 12, wobei die Zierfische ausgewählt sind aus der Gruppe bestehend aus Koikarpfen, Goldfische, Elritzen, Bitterlinge, Moderlieschen, Goldorfen, Sonnenbarsche.


**Claims**

1. Fish food composition, comprising:

40-70 % by weight cereal flour,
15-30 % by weight aquatic animal meal,
10-20 % by weight extraction meal,
0.01-0.40 % by weight pepper,
0.1-1.0 % by weight free methionine,
based on the total weight of the fish food composition.

2. Fish food composition according to claim 1, further comprising:

0.1-4.0 % by weight algae,
0.1-2.5 % by weight fermented rice,
0.01-0.10 % by weight herbs,
optionally 1.0-5.0 % by weight wheat germs,
based on the total weight of the fish food composition.

3. Fish food composition according to claim 2,
wherein the algae are selected from the group consisting of spirulina algae, marine algae and mixtures thereof,
optionally wherein the herbs are selected from the group consisting of thyme, sage, rosemary, fennel, anise, savoury and mixtures thereof.

4. Fish food composition according to any of claims 1 to 3, wherein the cereal flour is selected from the group consisting of wheat flour, maize flour, rice flour and mixtures thereof.

5.  Fish food composition according to any of claims 1 to 4, wherein the aquatic animal meal is selected from the group consisting of fish meal, krill meal, shrimp meal and mixtures thereof.

6.  Fish food composition according to any of claims 1 to 5, wherein the extraction meal is soya extraction meal, optionally wherein the free methionine is DL-methionine, further optionally wherein the pepper is black pepper.

7.  Fish food composition according to any of claims 1 to 6, wherein the fish food composition further contains additives selected from the group consisting of vitamins, antioxidants, colouring, choline chloride, inositol, and mixtures thereof.

8.  Fish food composition according to claim 7,

    wherein the vitamins are selected from the group consisting of vitamin A, vitamin $D_3$, vitamin E, vitamin C and mixtures thereof,
    optionally wherein the colouring is canthaxanthin,
    further optionally wherein the antioxidant is butylhydroxytoluene.

9.  Fish food composition according to any of claims 1 to 8, wherein the fish food composition consists of:

    50-60 % by weight wheat germ,
    20-25 % by weight fish meal,
    15-20 % by weight soya extraction meal,
    2-3 % by weight wheat germs,
    1.0-1.5 % by weight spirulina algae,
    0.1-1.0 % by weight shrimp meal,
    0.1-1.0 % by weight krill meal,
    0.1-1.0 % by weight fermented rice,
    0.1-1.0 % by weight marine algae,
    0.1-0.5 % by weight free DL-methionine,
    0.01-0.50 % by weight pepper
    0.01-0.10 % by weight herbs,
    and additives for the remainder, based on the total weight of the fish food composition.

10. Fish food composition according to any of claims 1 to 8, wherein the fish food composition consists of:

    45-55 % by weight maize flour,
    20-25 % by weight fish meal,
    15-20 % by weight soya extraction meal,
    8-12 % by weight wheat germs,
    0.1-1.0 % by weight shrimp meal,
    0.1-1.0 % by weight krill meal,
    0.1-1.0 % by weight fermented rice,
    0.1-1.0 % by weight marine algae,
    1.0-1.5 % by weight spirulina algae,
    0.1-0.5 % by weight free DL-methionine,
    0.01-0.50 % by weight pepper
    0.01-0.10 % by weight herbs,
    and additives for the remainder, based on the total weight of the fish food composition.

11. Use of the fish food composition according to any of claims 1 to 10 as fish food for ornamental fish.

12. Use according to claim 11, wherein the ornamental fish are freshwater fish.

13. Use according to either claim 11 or claim 12, wherein the ornamental fish are selected from the group consisting of koi carp, goldfish, minnows, bitterlings, sunbleaks, golden ides, sunfish.

**Revendications**

1. Composition d'aliment pour poissons, comprenant :

   40 à 70 % en poids de farine de céréale,
   15 à 30 % en poids de farine provenant d'animaux aquatiques,
   10 à 20 % en poids de tourteau d'extraction,
   0,01 à 0,40 % en poids de poivre,
   0,1 à 1,0 % en poids de méthionine libre,
   par rapport au poids total de la composition d'aliment pour poissons.

2. Composition d'aliment pour poissons selon la revendication 1, comprenant en outre:

   0,1 à 4,0 % en poids d'algues,
   0,1 à 2,5 % en poids de riz fermenté,
   0,01 à 0,10 % en poids d'herbes,
   éventuellement 1,0 à 5,0 % en poids de germes de blé,
   par rapport au poids total de la composition d'aliment pour poissons.

3. Composition d'aliment pour poissons selon la revendication 2,

   dans laquelle les algues sont choisies dans le groupe constitué d'algues spirulines, d'algues marines et de mélanges de celles-ci,
   dans laquelle les herbes sont éventuellement choisies dans le groupe constitué du thym, de la sauge, du romarin, du fenouil, de l'anis, de la sarriette et de mélanges de ceux-ci .

4. Composition d'aliment pour poissons selon l'une des revendications 1 à 3,
   dans laquelle la farine de céréale est choisie dans le groupe constitué de farine de blé, de farine de maïs, de farine de riz et de mélanges de celles-ci.

5. Composition d'aliment pour poissons selon l'une des revendications 1 à 4,
   dans laquelle la farine provenant d'animaux aquatiques est choisie dans le groupe constitué de farine de poisson, de farine de krill, de farine de crevette et de mélanges de celles-ci.

6. Composition d'aliment pour poissons selon l'une des revendications 1 à 5,
   dans laquelle le tourteau d'extraction est un tourteau d'extraction de soja, dans laquelle la méthionine libre est éventuellement de la DL-méthionine, dans laquelle le poivre est en outre éventuellement du poivre noir.

7. Composition d'aliment pour poissons selon l'une des revendications 1 à 6,
   la composition d'aliment pour poissons contenant en outre des additifs choisis dans le groupe constitué de vitamines, d'antioxydants, de colorant, de chlorure de choline, d'inositol et de mélanges de ceux-ci.

8. Composition d'aliment pour poissons selon la revendication 7,

   dans laquelle les vitamines sont choisies dans le groupe constitué de la vitamine A, de la vitamine D3, de la vitamine E, de la vitamine C et de mélanges de celles-ci,
   dans laquelle le colorant est éventuellement la canthaxanthine,
   dans laquelle l'antioxydant est en outre éventuellement l'hydroxytoluène de butyle.

9. Composition d'aliment pour poissons selon l'une des revendications 1 à 8,

   la composition d'aliment pour poissons étant constituée de :

   50 à 60 % en poids de farine de blé,
   20 à 25 % en poids de farine de poisson,
   15 à 20 % en poids de tourteau d'extraction de soja,
   2 à 3 % en poids de germes de blé,
   1,0 à 1,5 % en poids d'algues spirulines,

0,1 à 1,0 % en poids de farine de crevette,
0,1 à 1,0 % en poids de farine de krill,
0,1 à 1,0 % en poids de riz fermenté,
0,1 à 1,0 % en poids d'algues marines,
0,1 à 0,5 % en poids de DL-méthionine libre,
0,01 à 0,50 % en poids de poivre,
0,01 à 0,10 % en poids d'herbes,

et d'additifs pour le reste, par rapport au poids total de la composition d'aliment pour poissons.

10. Composition d'aliment pour poissons selon l'une des revendications 1 à 8,

la composition d'aliment pour poissons étant constituée de :

45 à 55 % en poids de farine de maïs,
20 à 25 % en poids de farine de poisson,
15 à 20 % en poids de tourteau d'extraction de soja,
8 à 12 % en poids de farine de blé,
0,1 à 1,0 % en poids de farine de crevette,
0,1 à 1,0 % en poids de farine de krill,
0,1 à 1,0 % en poids de riz fermenté,
0,1 à 1,0 % en poids d'algues marines,
1,0 à 1,5 % en poids d'algues spirulines,
0,1 à 0,5 % en poids de DL-méthionine libre,
0,01 à 0,50 % en poids de poivre,
0,01 à 0,10 % en poids d'herbes,

et d'additifs pour le reste, par rapport au poids total de la composition d'aliment pour poissons.

11. Utilisation de la composition d'aliment pour poissons selon l'une des revendications 1 à 10 comme aliment pour poissons pour des poissons d'aquarium.

12. Utilisation selon la revendication 11, dans laquelle les poissons d'aquarium sont des poissons d'eau douce.

13. Utilisation selon l'une des revendications 11 ou 12, dans laquelle les poissons d'aquarium sont choisis dans le groupe constitué de carpes koï, de poissons rouges, de vairons, de bouvières, d'ables de Heckel, d'ides dorés, de perches-soleil.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004048949 A1
- EP 1346647 A1

- DE 4233575 A1